# EUROPÄISCHE PATENTSCHRIFT

(11) **EP 1 141 068 B1**
(45) Veröffentlichungstag und Bekanntmachung des Hinweises auf die Patenterteilung: **31.07.2002**
(21) Anmeldenummer: 99966995.5
(22) Anmeldetag: 22.12.1999
(51) Int. Cl.: C08G 18/67, C08G 18/75, C08K 5/103

(54) **HÄRTBARE ZUBEREITUNGEN AUF ISOCYANATBASIS**
ISOCYANATE-BASED CURABLE PREPARATIONS
PREPARATIONS DURCISSABLES A BASE D'ISOCYANATE

(30) Priorität: 23.12.1998 DE 19860049
(43) Veröffentlichungstag der Anmeldung: 10.10.2001
(73) Patentinhaber: BASF AKTIENGESELLSCHAFT, 67056 Ludwigshafen (DE)
(72) Erfinder: SCHWALM, Reinhold, D-67157 Wachenheim (DE); BRUCHMANN, Bernd, D-67251 Freinsheim (DE); BECK, Erich, D-68526 Ladenburg (DE)
(74) Vertreter: Kinzebach, Werner, Dr.
(86) Internationale Anmeldenummer: EP9910291
(87) Internationale Veröffentlichungsnummer: WO0039182

(56) Entgegenhaltungen:
- EP-A- 0 658 582
- GB-A- 1 379 228
- US-A- 4 478 894
- US-A- 4 603 181
- US-A- 4 879 410
- US-A- 5 475 038
- US-A- 5 658 672

## Beschreibung

Die vorliegende Erfindung betrifft härtbare, insbesondere strahlungshärtbare, Zubereitungen, die ein Präpolymer auf der Basis eines Polyisocyanats und isocyanatreaktiver ethylenisch ungesättigter Verbindungen enthalten, ihre Verwendung zum Beschichten von Substraten und die so erhältlichen beschichteten Substrate.

Strahlungshärtbare Zusammensetzungen haben in der Technik eine breite Anwendung, insbesondere als hochwertige Beschichtungsmaterialien für Oberflächen erlangt. Unter strahlungshärtbaren Zusammensetzungen versteht man Zubereitungen, die ethylenisch ungesättigte Polymere oder Präpolymere enthalten, und die, gegebenenfalls nach einem physikalischen Trocknungsschritt, durch Einwirkung energiereicher Strahlung, beispielsweise durch Bestrahlen mit UV-Licht oder durch Bestrahlung mit energiereichen Elektronen (Elektronenstrahlung) ausgehärtet werden.

Strahlungshärtbare Zubereitungen werden überwiegend in der Beschichtung von Holz, Papier und Kunststoffen eingesetzt. Die erhaltenen Anstriche sollten möglichst flexibel und abrasionsresistent sein. Bei Anwendungen im Außenbereich sollten die Anstriche zusätzlich witterungsstabil und nicht vergilbend sein. Weitere Anforderungen sind eine hohe Kratzfestigkeit und Chemikalienresistenz.

Thermisch härtende Polyurethanzubereitungen werden z.B. in der Automobillackierung eingesetzt.

Bekannte härtbare Polyurethanzubereitungen enthalten als Isocyanatkomponente häufig aliphatische Isocyanurate, z.B. auf der Basis von Isophorondiisocyanat (IPDI) oder Hexamethylendiisocyanat (HDI). Die Produkte auf HDI-Basis haben allerdings den Nachteil einer schlechten Chemikalienstabilität, während die Produkte auf IPDI-Basis eine unzureichende Kratzfestigkeit aufweisen. Urethanacrylate auf der Basis aromatischer Isocyanate weisen andererseits eine hohe Vergilbungsneigung auf.

Der Erfindung liegt daher die Aufgabe zugrunde, härtbare Zubereitungen auf der Basis eines Polyisocyanats und isocyanatreaktiver ethylenisch ungesättigter Verbindungen bereitzustellen, die zu Beschichtungen hoher Kratzfestigkeit, guter Chemikalienstabilität, geringer Vergilbungsneigung und guter Witterungsstabilität führen.

Erfindungsgemäß wird diese Aufgabe durch eine härtbare Zubereitung gelöst, die ein Präpolymer enthält, das in einpolymerisierter Form enthält:
(a) ein di- oder polyfunktionelles Isocyanat auf der Basis einer Verbindung der allgemeinen Formel I 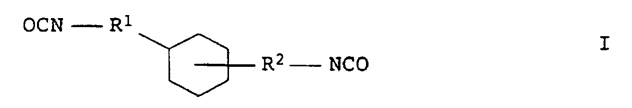 worin R¹ und R² unabhängig voneinander für C₁₋₁₂-Alkylen stehen und wobei das polyfunktionelle Isocyanat wenigstens eine Uretdion-, Isocyanurat-, Biuret - und/oder Allophanatgruppe pro Molekül enthält und einen NCO-Gehalt im Bereich von 5 bis 22 Gew.-% aufweist,
(b) eine isocyanatreaktive Gruppen enthaltende, ethylenisch ungesättigte Verbindung und
(c) gegebenenfalls eine isocyanatreaktive Gruppen enthaltende, gesättigte Verbindung.

Vorzugsweise stehen R¹ und R² unabhängig voneinander für C₁₋₄-Alkylen, wie Methylen, 1,2-Ethylen, 1,2-Propylen, 1,3-Propylen oder 1,4-Butylen.

Die erfindungsgemäße Zubereitung enthält im Allgemeinen:

| | |
|---|---|
| 20 bis 100 Gew.-%, | vorzugsweise 20 bis 80 Gew.-%, Präpolymer, |
| 0 bis 80 Gew.-%, | vorzugsweise 10 bis 50 Gew.-%, Reaktivverdünner |
| 0 bis 80 Gew.-% | Lösungsmittel oder Lösungsmittelgemische, |
| 0 bis 20 Gew.-%, | vorzugsweise 0,1-10 Gew.-%, Initiator und |
| 0 bis 20 Gew.-% | weitere Hilfsstoffe. |

Bei dem Präpolymer handelt es sich um das umsetzungsprodukt eines im Mittel wenigstens difunktionellen Polyisocyanats auf der Basis einer Verbindung der allgemeinen Formel I und einer isocyanatreaktive-Gruppen enthaltenden, ethylenisch ungesättigten Verbindung, gegebenenfalls unter Mitverwendung isocyanatreaktive Gruppen enthaltender, gesättigter Verbindungen.

Bei dem di- oder polyfunktionellen Isocyanat handelt es sich entweder um eine Verbindung der Formel I oder vorzugsweise um ein Oligomerisierungsprodukt, insbesondere ein Trimerisierungsprodukt, davon. Derartige Polyisocyanate werden in an sich bekannter weise durch Oligomerisierung einer Verbindung der Formel I, vorzugsweise bis zu einem NCO-Gehalt des Reaktionsgemisches von 40 bis 20, insbesondere 39 bis 30 Gew.-%, und anschließendes Abstoppen der Reaktion sowie gegebenenfalls destillativer Entfernung von nichtumgesetzter Verbindung der Formel I erhalten. Die Oligomerisierung kann in Gegenwart geeigneter Katalysatoren, wie quartärer Ammoniumsalze, z.B. N,N,N-Trimethyl-N-(2-hydroxypropyl)ammonium-2-ethylhexanoat oder N,N,N-Trimethyl-N-(2-hydroxypropyl)ammoniumhydroxid, erfolgen. Zum Abstoppen der Oligomerisierungsreaktion wird der Katalysator thermisch zersetzt oder ein geeignetes Mittel zugesetzt, das den Katalysator desaktiviert. Hierzu sind beispielsweise Säuren wie p-Toluolsulfonsäure oder Dibutylphosphat geeignet.

Die Polyisocyanate auf der Basis einer Verbindung der Formel I enthalten wenigstens eine Uretdion-, Isocyanurat-, Biuret - und/oder Allophanatgruppe pro Molekül.

Besonders bevorzugte Vertreter der Verbindung der allgemeinen Formel I sind 1,3- und 1,4-Bis(isocyanatomethyl)cyclohexan und Gemische davon.

Die Polyisocyanate auf der Basis von Verbindungen der allgemeinen Formel I können gegebenenfalls in Abmischung mit anderen Polyisocyanaten vorliegen. Die anderen Polyisocyanate werden vorzugsweise in einer Menge verwendet, dass weniger als 50%, insbesondere weniger als 30%, der gesamten NCO-Gruppen aus den Polyisocyanaten stammen, die nicht der allgemeinen Formel I entsprechen. Üblicherweise handelt es sich dabei um Tetramethylendiisocyanat, Hexamethylendiisocyanat (1,6-Diisocyanatohexan), Octamethylendiisocyanat, Decamethylendiisocyanat, Dodecamethylendiisocyanat, Trimethylhexandiisocyanat oder Tetramethylhexandiisocyanat, 1,4-, 1,3- oder 1,2-Diisocyanatocyclohexan, 4,4'-Di(isocyanatocyclohexyl)methan, 1-Isocyanato-3,3,5-trimethyl-5-(isocyanatomethyl)cyclohexan (Isophorondiisocyanat), 2,4- oder 2,6-Diisocyanato-1-methylcyclohexan, 2,4-Diisocyanatotoluol, 2,6-Diisocyanatotoluol, Tetramethylxylylendiisocyanat, 1,4-Diisocyanatobenzol, 4,4'- und 2,4'-Diisocyanatodiphenylmethan, p-Xylylendiisocyanat sowie Isopropenyldimethyltoluylendiisocyanat. Bevorzugt sind die aliphatischen und cycloaliphatischen Diisocyanate. Besonders geeignet sind auch hier die Oligomerisierungsprodukte dieser Diisocyanate, die in der Regel eine Uretdion-, Isocyanurat-, Biuret- und/oder Allophanatgruppe enthalten. Geeignet sind auch die Addukte der Diisocyanate an trifunktionelle Alkohole, wie Glycerin, Trimethylolethan, Trimethylolpropan usw. oder an Triamine.

"Isocyanatreaktive Gruppen" sind funktionelle Gruppen, die zu einer Additionsreaktion mit OCN-Gruppen unter Ausbildung einer kovalenten Bindung in der Lage sind, also insbesondere OH-, SH-, NH₂- oder COOH-Gruppen.

OH-Gruppen enthaltende ethylenisch ungesättigte Verbindungen zur Umsetzung mit den Polyisocyanaten sind in der Regel ausgewählt unter den Estern ethylenisch ungesättigter Carbonsäuren, wie Acrylsäure, Methacrylsäure, Crotonsäure, Acrylamidoglycolsäure, Methacrylamidoglycolsäure und Vinylessigsäure, mit einem Di- oder Polyol mit vorzugsweise 2-20 C-Atomen, wie Ethylenglycol, Diethylenglycol, Triethylenglycol, 1,2-Propylenglycol, 1,3-Proppylenglycol, Dipropylenglycol, Tripropylenglycol, 1,4-Butandiol, 1,5-Pentandiol, Neopentylglycol, 1,6-Hexandiol, 2-Methyl-1,5-pentandiol, 2-Ethyl-1,4-butandiol, 1,4-Dimethylolcyclohexan, Glycerin, Trimethylolethan, Trimethylolpropan, Trimethylolbutan, Pentaerythrit, Ditrimethylolpropan, Erythrit und Sorbit, sofern der Ester wenigstens eine gegenüber Isocyanat reaktive OH-Gruppe aufweist. Weiterhin können auch die Amide der vorgenannten ethylenisch ungesättigten Carbonsäuren mit Aminoalkoholen, z.B. 2-Aminoethanol, 3-Amino-1-propanol, 1-Amino-2-propanol oder 2-(2-Aminoethoxy)ethanol, sowie die Vinyl-, Allyl- und Methallylether der genannten Di- oder Polyole eingesetzt werden, sofern sie noch eine freie OH-Gruppe aufweisen. Bevorzugt sind die Ester der Acrylsäure und der Methacrylsäure, wie 2-Hydroxyethyl(meth)acrylat, Hydroxypropyl(meth)acrylat, 1,4-Butandiolmono(meth)acrylat, Neopentylglycolmono(meth)acrylat, Trimethylolpropanmono- und -di(meth)acrylat, Pentaerythritdi- und -tri(meth)acrylat. Besonders bevorzugt sind unter 2-Hydroxyethylacrylat, Hydroxypropylacrylat und 1,4-Butandiolmonoacrylat ausgewählte Ester.

Daneben können gesättigte Amin- oder Alkoholkomponenten mitverwendet werden. Geeignete gesättigte Alkoholkomponenten sind z.B. lineare Mono-, Di- und Polyole mit 1-14 C-Atomen, verzweigte Mono-, Di- und Polyole mit 3-20 Kohlenstoffatomen und cyclische Mono-, Di- und Polyole mit 3-14 Kohlenstoffatomen. Bevorzugt sind Methanol, Ethanol, n-Propanol, i-Propanol, n-Butanol, i-Butanol, tert-Butanol, Ethylenglycol, Butandiol, Hexandiol, Cyclohexandiol, Glycerin, Trimethylolpropan und Pentaerythrit.

Das Präpolymer ist vorzugsweise im Wesentlichen isocyanatgruppenfrei. Bei seiner Herstellung wird daher vorzugsweise ein Äquivalentverhältnis der Summe der gegenüber Isocyanat reaktiven Gruppen zu Isocyanatgruppen von 0,9:1 bis 1,1:1, insbesondere von etwa 1:1, eingesetzt. Es ist bevorzugt, daß 50-100 Mol%, insbesondere 60-90 Mol% der gegenüber Isocyanat reaktiven Gruppen aus der ethylenisch ungesättigten Verbindung und 0-50 Mol%, insbesondere 10-40 Mol% aus der gesättigten Verbindung stammen.

Die Herstellung des Präpolymers durch Umsetzung der Polyisocyanatkomponente und der isocyanatreaktive Gruppen enthaltenden Verbindungen kann nach bekannten Methoden, gegebenenfalls unter Mitverwendung geeigneter Polyadditionskatalysatoren, erfolgen. Geeignete Katalysatoren sind beispielsweise Zinn(II)-octoat, Dibutylzinndilaurat oder tertiäre Amine, wie Dimethylbenzylamin. Die Umsetzung kann in Substanz oder in Gegenwart der als Reaktivverdünner geeigneten Komponenten und/oder in Gegenwart eines Lösungsmittels vorgenommen werden, sofern diese Komponenten keine gegenüber Isocyanaten reaktiven H-Atome enthalten.

Um eine unerwünschte, vorzeitige Polymerisation der ethylenisch ungesättigten Gruppen zu vermeiden, können gegebenenfalls bei der Herstellung des Polyurethans Polymerisationsinhibitoren zugesetzt werden. Dafür eignen sich z.B. Chinone, Phenole oder Phenolderivate, wie para-Benzochinon, Hydrochinon, p-Methoxyphenol, Phenothiazin, 2,2,6,6-Tetramethylpiperidin-1-yloxy, 4-Hydroxy-2,2,6,6-tetramethylpiperidin-1-yloxy usw.

Die erfindungsgemäße härtbare Zubereitung enthält in der Regel einen Reaktivverdünner. Mengen von 0-80 Gew.-%, vorzugsweise 10-50 Gew.-%, bezogen auf die Zubereitung, an Reaktivverdünner sind geeignet.

Als Reaktivverdünner eignen sich beispielsweise vinylgruppenhaltige Monomere, insbesondere N-Vinylverbindungen, wie N-Vinylpyrrolidol, N-Vinylcaprolactam und N-Vinylformamid, weiterhin Vinylether, wie Ethyl-, Propyl-, Isopropyl-, Butyl-, Isobutyl-, tert-Butyl-, Amyl-, 2-Ethylhexyl-, Dodecyl-, Octadecyl- Cyclohexylvinylether, Ethylenglycolmono- und -divinylether, Di-, Tri- und Tetraethylenglycolmono- und -divinylether, Polyethylenglycoldivinylether, Ethylenglycolbutylvinylether, Triethylenglycolmethylvinylether, Polyethylenglycolmethylvinylether, Cyclohexandimethanoimono- und -divinylether, Trimethylolpropantrivinylether, Aminopropylvinylether, Diethylaminoethylvinylether und Propyltetrahydrofurandivinylether, Vinylester, wie Vinylacetat, -propionat, -stearat und -laurat, und Vinylaromaten, wie Vinyltoluol, Styrol, 2- und 4-Butylstyrol und 4-Decylstyrol sowie Acrylat- oder Methacrylatgruppen enthaltende Monomere, z.B. Hydroxyethyl(meth)acrylat, Tripropylenglycolmethylether(meth)acrylat, Cyclohexyl(meth)acrylat, 4-tert-Butylcyclohexyl(meth)acrylat, Trimethylolpropanmonoformalacrylat, Glycerinmonoformalacrylat, 4-Tetrahydropyranylacrylat, 2-Tetrahydropyranylmethacrylat und Tetrahydrofurfurylacrylat.

Bevorzugte Reaktivverdünner sind di- oder polyfunktionale Ester α,β-ethylenisch ungesättigter Carbonsäuren mit aliphatischen Dioder Polyolen, insbesondere Diester α,β-ethylenisch ungesättigter Carbonsäuren, wie Acrylsäure oder Methacrylsäure, mit C₂- bis C₁₄-Diolen. Als Di- oder Polyolkomponente kommen beispielsweise Ethylenglycoldi(meth)acrylat, Propylenglycoldi(meth)acrylat, Butylenglycoldi(meth)acrylat, 1,6-Hexandioldi(meth)acrylat, Dekandioldi(meth)acrylat, Diethylenglycoldi(meth)acrylat, Triethylenglycoldi(meth)acrylat, Dipropylenglycoldi(meth)acrylat, Tripropylenglycoldi(meth)acrylat, 1,4-Cyclohexandioldi(meth)acrylat und 1,4-Bis(hydroxymethyl)cyclohexandi(meth)acrylat, ferner Trimethylolethantri(meth)acrylat, Trimethylolpropantri(meth)acrylat und Pentaerythrittetra(meth)acrylat in Frage. Bevorzugt sind auch die Ester ethoxylierter Polyole, z.B. das Triacrylat oder das Trimethacrylat von ethoxyliertem Trimethylolpropan.

Ferner können die erfindungsgemäßen härtbaren Zubereitungen je nach Verwendungszweck 0 bis 80 Gew.-% Lösungsmittel und bis zu 20 Gew.-%, bezogen auf das Gesamtgewicht der Zubereitung, übliche Hilfsmittel, Verdicker, Verlaufshilfsmittel, Entschäumer, UV-Stabilisatoren, Gleitmittel und Füllstoffe enthalten. Geeignete Hilfsmittel sind dem Fachmann der Lack-Beschichtungs-Technologie geläufig. Geeignete Füllstoffe umfassen Silicate, z.B. durch Hydrolyse von Siliciumtetrachlorid erhältliche Silicate, wie Aerosil® der Firma Degussa, Kieselerde, Talkum, Aluminiumsilikate, Magnesiumsilicate, Calciumcarbonate usw. Geeignete Stabilisatoren umfassen typische UV-Absorber, wie Oxanilide, Triazine und Benzotriazol sowie Benzophenone. Diese können alleine oder zusammen mit geeigneten Radikalfängern, beispielsweise sterisch gehinderten Aminen, wie 2,2,6,6-Tetramethylpiperidin, 2,6-Di-tert-butylpiperidin oder deren Derivate, z.B. Bis-(2,2,6,6-Tetramethyl-4-piperidyl)sebacinat, eingesetzt werden. Stabilisatoren werden üblicherweise in Mengen von 0,1-5,0 Gew.-%, bezogen auf das Gesamtgewicht der Zubereitung, eingesetzt.

Geeignete Lösungsmittel sind beispielsweise C₅- bis C₈-Kohlenwasserstoffe, bzw. cyclische Kohlenwasserstoffe, fluorierte, chlorierte Kohlenwasserstoffe; C₁- bis C₆-Alkanole bzw. Cycloalkanole und Lösungsmittelsysteme, die aus Alkoholen, wie Methanol, Ethanol, Propanol, i-Propanol, n-Butanol, i-Butanol, und/oder aliphatischen Estern, wie Essigsäureethylester oder Essigsäurebutylester, bestehen.

Sofern die Aushärtung mittels UV-Strahlung erfolgt, enthalten die erfindungsgemäßen Zubereitungen wenigstens einen Photoinitiator, der die Polymerisation ethylenisch ungesättigter Doppelbindungen initiieren kann. Hierzu zählen Benzophenon und Benzophenonderivate, wie 4-Phenylbenzophenon und 4-Chlorbenzophenon, Michler's Keton, Anthron, Acetophenonderivate, wie 1-Benzoylcyclohexan-1-ol, 2-Hydroxy-2,2-dimethylacetophenon und 2,2-Dimethoxy-2-phenylacetophenon, Benzoin und Benzoinether, wie Methyl-, Ethyl- und Butylbenzoinether, Benzilketale, wie Benzildimethylketal, 2-Methyl-1-[4-(methylthio)phenyl]-2-morpholinopropan-1-on, Anthrachinon und seine Derivate, wie β-Methylanthrachinon und tert-Butylanthrachinon, Azylphosphinoxide, wie 2,4,6-Trimethylbenzoyldiphenylphosphinoxid, Ethyl-2,4,6-Trimethylbenzoylphenyldiphosphinat und Bisazylphosphinoxide. Die genannten Photoinitiatoren, sofern erforderlich, in Mengen von 0,05-20 Gew.-%, vorzugsweise 0,1-10 Gew.-% und insbesondere 0,2-5 Gew.-%, bezogen auf das Gesamtgewicht der Zubereitung, eingesetzt. Sofern die erfindungsgemäße Zubereitung mittels Elektronenstrahlung gehärtet wird, kann auf Photoinitiatoren verzichtet werden.

Die erfindungsgemäßen Zubereitungen liefern Anstriche bzw. Beschichtungen mit einem ausgewogenen Eigenschaftsprofil hinsichtlich der Kratzfestigkeit, der Chemikalienstabilität, der Vergilbungs- und Witterungsstabilität. So ist z.B. die Kratzfestigkeit im Vergleich zu einer Zubereitung auf der Basis von Isophorondiisocyanat erheblich verbessert, ohne die Chemikalienstabilität zu beeinträchtigen. Die Beschichtungen sind außerdem witterungsbeständig und vergilbungsfrei. Die erfindungsgemäßen Zubereitungen sind besonders geeignet zum Beschichten von Substraten, wie Metall (Coil und Can Coating), Automobilaußenteilen, Kunststoffen, wie PC, PVC, Skier, Snowboards, Kunststoffkotflügel und sonstige Autoteile, etc. und mineralischen Substraten, wie Dachbausteine, Eternitplatten etc.

Demzufolge betrifft die vorliegende Erfindung auch ein Verfahren zum Beschichten von Substraten, sowie die durch dieses Verfahren erhältlichen beschichteten Substrate. Die Beschichtung der Substrate erfolgt in der Regel dadurch, dass man wenigstens eine erfindungsgemäße härtbare Zubereitung auf das zu beschichtende Substrat in der gewünschten Stärke aufbringt, gegebenenfalls vorhandenes Lösungsmittel entfernt und anschließend thermisch oder durch Einwirkung energiereicher Strahlung, wie UV-Strahlung oder Elektronenstrahlung, aushärtet. Dieser Vorgang kann, sofern gewünscht, ein- oder mehrfach wiederholt werden. Das Aufbringen der härtbaren Zubereitungen auf das Substrat erfolgt in bekannter Weise, z.B. durch Spritzen, Spachteln, Rakeln, Bürsten, Rollen oder Gießen. Die Beschichtungsstärke liegt in der Regel im Bereich von 3-500 g/m² und vorzugsweise 10-200 g/m², entsprechend Nassfilmdicken von etwa 3-500 µm, vorzugsweise 10-200 µm. Das Aufbringen kann sowohl bei Raumtemperatur als auch bei erhöhter Temperatur, vorzugsweise jedoch nicht oberhalb 100°C erfolgen. Anschließend werden die Beschichtungen thermisch oder durch Einwirkung der energiereichen Strahlung, vorzugsweise UV-Strahlung der Wellenlänge 250-400 nm, oder durch Bestrahlung mit energiereichen Elektronen (Elektronenstrahlung; 150-300 keV) gehärtet. Als UV-Quellen dienen beispielsweise Hochdruckquecksilberdampflampen, z.B. CK- oder CK1-Strahler der Firma IST. Die üblicherweise zur Vernetzung ausreichende Strahlungsdosis bei UV-Härtung liegt im Bereich von 80-3000 mJ/cm².

Die Erfindung wird nun durch die folgenden Beispiele näher veranschaulicht.

### Beispiel 1

### Herstellung eines Isocyanurats aus 1,3-Bis(isocyanatomethyl)cyclohexan.

1,3-Bis(isocyanatomethyl)cyclohexan wurde vorgelegt und unter Stickstoffbegasung auf 100°C erwärmt. Dann gab man 0,1 Gew.-% N,N,N-Trimethyl-N-(2-hydroxypropyl)ammonium-2-ethylhexanoat als Katalysator dazu und rührte die Mischung bei 100°C. Die NCO-Abnahme durch Trimerisierung wurde kontinuierlich verfolgt, indem in Abständen von 10 min Proben entnommen wurden. Der Isocyanatgehalt wurde durch Umsetzung einer definierten Menge der Reaktionsmischung mit einem Überschuß an Dibutylamin und Rücktitration des Überschusses mit 0,1 N Salzsäure bestimmt. Bei einem NCO-Gehalt der Mischung von 36 Gew.-% wurde die Trimerisierung durch Zugabe von 0,1 Gew.-% Di(2-ethylhexyl)phosphat beendet. Anschließend wurde das Produktgemisch bei 130°C und einem Druck von 3 mbar im Dünnschichtverdampfer vom monomeren Diisocyanat befreit. Das viskose polymere Endprodukt wurde in Methoxypropylacetat gelöst, wobei eine 80%ige Lösung erhalten wurde. Der NCO-Gehalt der Lösung betrug 15,5 Gew.-%, die Viskosität lag bei 12900 mPa·s (25°C).

### Herstellung des Präpolymers

26,3 g Hydroxyethylacrylat, 40,36 g Hexandioldiacrylat, 0,05 g Hydrochinon-monomethylether, 0,09 g Kerobit TBK und 0,02 g Dibutylzinndilaurat wurden in einem Reaktionskolben vorgelegt und bei Raumtemperatur gerührt. Dazu gab man innerhalb von 15 min 64,5 g des Isocyanurats von 1,3-Bis(isocyanatomethyl)cyclohexan. Man rührte bei 70°C weiter, bis ein NCO-Wert von 2,4% erreicht ist (6 h). Man kühlte leicht ab, gab 2,9 g Methanol dazu und rührte bei 70°C weiter, bis der NCO-Wert 0,05% betrug. Das Produkt wurde über ein 10 µm Filter filtriert und abgefüllt. Die Viskosität betrug 5,4 Pa·s. Das Infrarotspektrum wies keine NCO-Bande mehr auf und enthält Acrylatbanden (810 cm⁻¹).

### Vergleichsbeispiel 1

Es wurde gemäß der Beschreibung in Beispiel 1 ein Präpolymer hergestellt, wobei anstelle des Isocyanurats des 1,3-Bis(isocyanatomethyl)cyclohexans das Isocyanurat des Isophorondiisocyanats verwendet wurde.

### Vergleichsbeispiel 2

Gemäß der Beschreibung in Beispiel 1 wurde ein Präpolymer hergestellt, wobei anstelle des Isocanurats des 1,3-Bis(isocyanatomethyl)cyclohexans das Isocyanurat des Hexamethylendiisocyanats verwendet wurde.

### Herstellungsbeispiel

Zu den gemäß Beispiel 1 und Vergleichsbeispiel 1 und 2 hergestellten Präpolymeren gab man 2 Gew.-% Hydroxyacetophenon-Photoinitiator (Irgacure 184, Ciba Specialties). Die Lacke wurden mit Butylacetat auf eine Viskosität von 500 mPa·s verdünnt. Sie wurden in einer Schichtdicke von 100 µm auf die Substrate Glas bzw. Blech aufgezogen und in einer IST-Belichtungsanlage mit 120 Watt-Lampen mit einer Geschwindigkeit von 2,5 m/min 3 mal belichtet.

### Beurteilung der Kratzfestigkeit:

Die Beurteilung der Kratzfestigkeit erfolgte in einem Scheuertest, bei dem mit einem Scotch Brite-Gewebe unter einem Gewicht von 500 g 50 Doppelhübe ausgeführt wurden. Es wurde der Glanz vor und nach dem Scheuertest ermittelt.

| | Glanz vor dem Scheuertest | Glanz nach dem Scheuertest |
|---|---|---|
| Beispiel 1 | 98 | 65 |
| Vergleichsbeispiel 1 | 97 | 54 |
| Vergleichsbeispiel 2 | 97 | 63 |

Die Ergebnisse zeigen, dass bei allen Systemen nach dem Scheuertest ein deutlicher Glanzverlust auftritt. Das erfindungsgemäße Harz zeigt den geringsten Glanzverlust und ist deutlich besser als die Isophorondiisocyanat enthaltende Zusammensetzung.

### Beurteilung der Chemikalienstabilität:

Zur Beurteilung der Chemikalienstabilität brachte man typische Haushaltschemikalien auf die gehärteten Filme auf, ließ diese 24 h einwirken und beurteilte den Grad der Schädigung auf einer Skala von 0 bis 5 (0: keine Schädigung; 5: Film zerstört).

| Chemikalie | Beispiel | Vergl. 1 | Vergl. 2 |
|---|---|---|---|
| Na-carbonat | 0 | 0 | 0 |
| Rotwein | 0 | 0 | 2 |
| Kaffee | 0 | 0 | 1 |
| Johannisbeersaft | 0 | 0 | 0 |
| Ethylacetat | 0 | 0 | 0 |
| Senf | 1 | 0 | 2,5 |
| Lippenstift | 0 | 0 | 0 |
| Desinfektionsmittel | 0 | 0 | 0 |
| Kulipaste | 4 | 4 | 4 |
| Reinigungsmittel | 0 | 0 | 0 |
| Durchschnittswert aus 10: | 0,5 | 0,4 | 0,95 |

Die Ergebnisse zeigen, dass die Chemikalienstabilität der erfindungsgemäßen Zubereitung deutlich besser als diejenige von Vergleichsbeispiel 2 ist. Sie ist etwa gleichgut wie diejenige des Vergleichsbeispiels 1.

Diese Ergebnisse zeigen, dass die erfindungsgemäße Zubereitung überraschenderweise sowohl gute Kratzfestigkeiten als auch gute Chemikalienstabilität aufweist, während Urethanacrylate auf der Basis von IPDI-Isocyanurat zwar eine gute Chemikalienstabilität aber eine schlechte Kratzfestigkeit, und Urethanacrylate auf der Basis von HDI-Isocyanurat zwar eine gute Kratzfestigkeit aber eine schlechte Chemikalienstabilität aufweisen.

### Beurteilung der Vergilbung und Witterungsstabilität

Im Xenontest zeigen sowohl die Beschichtungen der Zubereitung nach Beispiel 1 als auch die der Vergleichsbeispiele nach 500 h keine Vergilbung (b-Werte < 2). Keine der Beschichtungen zeigte Filmriß oder -abbau. Der Xenontest erfolgte entsprechend DIN 53231.

## Patentansprüche

1. Härtbare Zubereitung, enthaltend ein Präpolymer, das in einpolymerisierter Form enthält:
(a) ein di- oder polyfunktionelles Isocyanat auf der Basis einer Verbindung der allgemeinen Formel I 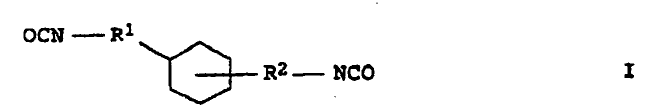 worin R¹ und R² unabhängig voneinander für C₁₋₁₂-Alkylen stehen,
und wobei das polyfunktionelle Isocyanat wenigstens eine Uretdion-, Isocyanurat-, Biuret- und/oder Allophanatgruppe pro Molekül enthält und einen NCO-Gehalt im Bereich von 5 bis 22 Gew.-% aufweist,
(b) eine isocyanatreaktive Gruppen enthaltende, ethylenisch ungesättigte Verbindung und
(c) gegebenenfalls eine isocyanatreaktive Gruppen enthaltende, gesättigte Verbindung.

2. Zubereitung nach Anspruch 1, **dadurch gekennzeichnet, dass** es sich bei der Verbindung der Formel I um 1,3- oder 1,4-Bis(isocyanatomethyl)cyclohexan oder ein Gemisch hiervon handelt.

3. Zubereitung nach einem der vorhergehenden Ansprüche, **dadurch gekennzeichnet, dass** die isocyanatreaktive Gruppen enthaltende, ethylenisch ungesättigte Verbindung ein C₂₋₁₂-Hydroxyalkyl(meth)acrylat ist.

4. Zubereitung nach einem der vorhergehenden Ansprüche, **dadurch gekennzeichnet, dass** sie außerdem einen Reaktivverdünner enthält.

5. Zubereitung nach Anspruch 4, **dadurch gekennzeichnet, dass** der Reaktivverdünner ein Diester einer α,β-ethylenisch ungesättigten Carbonsäure mit C₂₋ bis C₁₄-Diolen ist.

6. Verwendung der strahlungshärtbaren Zubereitung nach einem der Ansprüche 1 bis 5 zum Beschichten von Substraten.

7. Verfahren zum Beschichten von Substraten, **dadurch gekennzeichnet, dass** man eine härtbare Zubereitung nach einem der Ansprüche 1 bis 5 auf das zu beschichtende Substrat aufbringt und anschließend durch Bestrahlung mit UV- oder Elektronenstrahlung härtet.

8. Beschichtetes Substrat, erhältlich durch ein Verfahren nach Anspruch 7.

## Claims

1. A curable composition comprising a prepolymer which comprises, in copolymerized form:
(a) a bifunctional or polyfunctional isocyanate which is based on a compound of the formula I 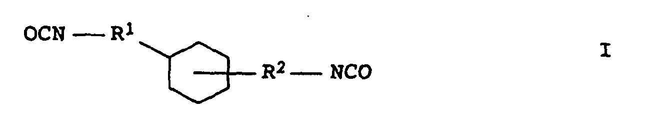 where R¹ and R² are independently C₁-C₁₂-alkylene, and
where the polyfunctional isocyanate contains at least one uretdione, isocyanurate, biuret and/or allophanate group per molecule and has an NCO content in the range from 5 to 22% by weight,
(b) an ethylenically unsaturated compound containing isocyanate-reactive groups and
(c) if desired, a saturated compound containing isocyanate-reactive groups.

2. A composition as claimed in claim 1, wherein the compound of the formula I is 1,3- or 1,4-bis(isocyanato-methyl) cyclohexane or a mixture thereof.

3. A composition as claimed in any of the preceding claims, wherein the ethylenically unsaturated compound containing isocyanate-reactive groups is a C₂-C₁₂-hydroxyalkyl (meth)acrylate.

4. A composition as claimed in any of the preceding claims which further comprises a reactive diluent.

5. A composition as claimed in claim 4,wherein the reactive diluent is a diester of an α,β-ethylenically unsaturated carboxylic acid with C₂-C₁₄-diols.

6. The use of a radiation-curable composition as claimed in any of claims 1 to 5 for coating substrates.

7. A process for coating substrates, which comprises applying a curable composition as claimed in any of claims 1 to 7 to the substrate to be coated and subsequently curing the composition by irradiation with UV or electron radiation.

8. A coated substrate obtainable by a process as claimed in claim 7.

## Revendications

1. Préparation durcissable contenant un prépolymère qui contient, sous forme polymérisée :
(a) un isocyanate bifonctionnel ou polyfonctionnel à base d'un composé de formule générale I 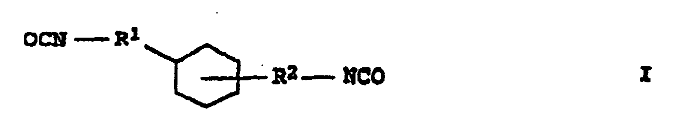 dans laquelle R¹ et R² représentent indépendamment l'un de l'autre, un groupe alcène en C₁ à C₁₂,
et où l'isocyanate polyfonctionnel comprend au moins, par molécule, un groupe uretdione, isocyanurate, biuret et/ou allophanate, et présente une teneur en NCO dans la plage de 5% à 22% en poids,
(b) un composé à insaturation éthylénique présentant des groupes réactifs par rapport à l'isocyanate et
(c) éventuellement un composé saturé présentant des groupes réactifs par rapport à l'isocyanate.

2. Préparation selon la revendication 1, **caractérisée en ce que** le composé de formule I est le 1,3-bis(isocyanatométhyl)cyclohexane ou le 1,4-bis(isocyanatométhyl)cyclohexane ou bien leur mélange.

3. Préparation selon l'une quelconque des revendications précédentes, **caractérisée en ce que** le composé à insaturation éthylénique présentant des groupes réactifs par rapport à l'isocyanate est le (méth)acrylate d'hydroxyalkyle en C₂ à C₁₂.

4. Préparation selon l'une quelconque des revendications précédentes, **caractérisée en ce qu'**elle contient en plus un diluant réactif.

5. Préparation selon la revendication 4, **caractérisée en ce que** le diluant réactif est un diester d'un acide carboxylique à insaturation éthylénique en position α,β et d'un diol en C₂ à C₁₄.

6. Mise en oeuvre de la préparation durcissable selon l'une des revendications 1 à 5, pour le revêtement des substrats.

7. Procédé de revêtement de substrats, **caractérisé en ce que** l'on applique, sur le substrat devant être revêtu, une préparation durcissable selon l'une des revendications 1 à 5, que l'on durcit ensuite au moyen d'une irradiation par des rayons UV ou électroniques.

8. Substrat revêtu que l'on peut obtenir en réalisant le procédé selon la revendication 7.
